(19) **Europäisches Patentamt / European Patent Office / Office européen des brevets**

(11) **EP 2 612 933 B1**

(12) **EUROPEAN PATENT SPECIFICATION**

(45) Date of publication and mention of the grant of the patent:
**26.02.2020 Bulletin 2020/09**

(51) Int Cl.:
*C21D 8/12* [(2006.01)]   *C22C 1/02* [(2006.01)]
*C22C 38/00* [(2006.01)]   *C22C 38/06* [(2006.01)]
*C22C 38/60* [(2006.01)]

(21) Application number: **11821638.1**

(22) Date of filing: **25.08.2011**

(86) International application number:
**PCT/JP2011/069136**

(87) International publication number:
**WO 2012/029621 (08.03.2012 Gazette 2012/10)**

(54) **METHOD OF PRODUCING A NON-ORIENTED ELECTRICAL STEEL SHEET**

VERFAHREN ZUM HERSTELLEN EINES NICHT-ORIENTIERTEN ELEKTRISCHEN STAHLBLECHS

PROCÉDÉ DE PRODUIRE DE FEUILLE D'ACIER ÉLECTRIQUE NON ORIENTÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2010 JP 2010191714**

(43) Date of publication of application:
**10.07.2013 Bulletin 2013/28**

(73) Proprietor: **JFE Steel Corporation**
**Tokyo 100-0011 (JP)**

(72) Inventors:
 • **ZAIZEN, Yoshiaki**
  **Tokyo 100-0011 (JP)**
 • **ODA, Yoshihiko**
  **Tokyo 100-0011 (JP)**
 • **KOHNO, Masaaki**
  **Tokyo 100-0011 (JP)**

(74) Representative: **Haseltine Lake Kempner LLP**
**Lincoln House, 5th Floor**
**300 High Holborn**
**London WC1V 7JH (GB)**

(56) References cited:
**EP-A1- 0 606 884      EP-A2- 0 334 224**
**EP-A2- 1 179 603      JP-A- 2 011 728**
**JP-A- 4 346 621      JP-A- 5 005 126**
**JP-A- 5 171 291      JP-A- H05 171 291**
**JP-A- H06 228 645**

• **S. K. CHANG ET AL: "Texture Effect on Magnetic Properties by Alloying Specific Elements in Non-grain Oriented Silicon Steels", ISIJ INTERNATIONAL, vol. 45, no. 6, 1 January 2005 (2005-01-01), pages 918-922, XP055273362, JP ISSN: 0915-1559, DOI: 10.2355/isijinternational.45.918**
• **Toshiro Tomida: "Decarburization of 3%Si-1.1%Mn-0.05%C Steel Sheets by Silicon Dioxide and Development of {100}h012i Texture *", , 1 January 2002 (2002-01-01), XP055273276, Retrieved from the Internet: URL:http://www.jim.or.jp/journal/e/pdf3/44/06/1096.pdf [retrieved on 2016-05-18]**

EP 2 612 933 B1

**Description**

TECHNICAL FIELD

This invention relates to a method of producing a non-oriented electrical steel sheet, and more particularly to a method of producing a non-oriented electrical steel sheet with an excellent magnetic flux density in a rolling direction of the steel sheet.

RELATED ART

Recently, it is strongly required to render electric equipments into higher efficiency and downsizing in universal current of reducing energy inclusive of power. As a result, even in non-oriented electrical steel sheets widely used as a core material or the like of the electric equipment, it becomes an essential agenda to improve magnetic property or to attain a higher magnetic flux density and a lower iron loss for achieving the downsizing and high efficiency of the electric equipment.

For such requirements on the non-oriented electrical steel sheet, it has hitherto been attempted to make the magnetic flux density higher by selecting appropriate alloying elements to be added and further increasing a crystal grain size before cold rolling or optimizing a cold rolling reduction, while it has been attempted to make the iron loss lower by adding an element for increasing electrical resistance or reducing a sheet thickness.

In a driving motor for hybrid automobiles and so on, a segment core is adopted from a viewpoint of an improved yield. The segment core is formed by dividing the core into several parts instead that the core is punched out as a single part from a raw steel sheet as usual, and punching these parts so as to render a longitudinal direction of a teeth in each part into a rolling direction of the steel sheet and assembling the punched parts into a core. In the segment core, the longitudinal direction of the teeth concentrating the magnetic flux is the rolling direction of the electrical steel sheet, so that the properties of the electrical steel sheet in the rolling direction become very important for attaining the improvement of properties of the motor.

As a material enhancing the magnetic flux density in the rolling direction is mentioned a grain oriented electrical steel sheet having a Goss orientation aligned in the rolling direction. However, the grain oriented electrical steel sheet is produced through a secondary recrystallization process, so that the production cost is high and the sheet is not substantially used as the segment core actually. Therefore, it is considered that it allows to use cheap, non-oriented electrical steel sheets as an optimum material for the segment core if the magnetic flux density in the rolling direction thereof can be improved.

As a technique responding such a requirement, for example, Patent Document 1 discloses a method of producing a non-oriented electrical steel sheet comprising hot rolling a steel having C: not more than 0.002 mass%, Si: not less than 0.1 mass% but less than 0.8 mass%, Al: 0.3-2.0 mass%, Mn: 0.1-1.5 mass% and Si+2A1-Mn: not less than 2%, subjecting a hot band annealing to render an average crystal grain size into not less than 300 $\mu$m, performing a single cold rolling at a rolling reduction of 85-95% for a final sheet thickness and then performing a finish annealing at 700-950°C for 10 seconds to 1 minute.

Also, Patent Document 2 discloses a non-oriented electrical steel sheet for a segment core having a thickness of 0.15-0.3 mm formed by subjecting a hot rolled steel sheet having C: not more than 0.005 mass%, Si: 2-4 mass% and Al: more than 1 mass% but not more than 2 mass% to an annealing, a single cold rolling and further a recrystallization annealing to provide a recrystallization structure having an average crystal grain size of 40-200 $\mu$m and magnetic property satisfying a relationship of a magnetic flux density $B_{50}(C)$ in 90° direction (C-direction) relative to the rolling direction (L-direction), a magnetic flux density $B_{50}(X)$ in 45° direction (X-direction) relative to the rolling direction (L-direction) and a thickness t (mm) of the following equation:

$$B_{50}(C)/B_{50}(X) \geq -0.5333 \times t^2 + 0.3907 \times t + 0.945.$$

Patent document 3 discloses to enhance the crystallographic texture of a non-oriented electrical steel sheet by ultra-rapid annealing at heating rates above 100 °C per second. Non-oriented electrical steels are stated to contain carbon below 0.1% which is decarburized to below 0.005% during processing to avoid magnetic aging. An example steel sheet having 0.0044% C prior to annealing is disclosed.

Non-patent document 1 discusses alloying steel for non-oriented electrical steel sheets with Sn or Sb to enhance grain size and thus texture factor, with specific values of 0.1% Sn and 0.076% Sb being disclosed.

PRIOR ART DOCUMENTS

PATENT DOCUMENTS

Patent Document 1: JP-A-2004-332042
Patent Document 2: JP-A-2008-127600
Patent Document 3: EP 0 334 224 A2

Non-Patent document 1: S. K. CHANG ET AL: "Texture Effect on Magnetic Properties by Alloying Specific Elements in Non-grain Oriented Silicon Steels", ISIJ INTERNATIONAL, vol. 45, no. 6, 1 January 2005, pages 918-922, XP055273362

SUMMARY OF THE INVENTION

PROBLEMS TO BE SOLVED BY THE INVENTION

According to the method of Patent Document 1, a magnetic steel sheet having excellent magnetic property in the rolling direction and vertical direction thereof can be obtained by controlling the crystal grain size after the hot band annealing and the rolling reduction in the cold rolling. However, this method has problems in the productivity and cost because it is required to reduce impurity content in steel remarkably and to conduct the hot band annealing at a higher temperature (for example, 1000-1050°C) for obtaining a crystal grain size before the cold rolling of not less than 300$\mu$m. The method of Patent Document 2 has problems in the productivity and cost because the temperature of the hot band annealing is necessary to be high (higher than 900° C, for example, 920-1100°C) and also it is required to add a greater amount of Al.

The invention is made in view of the above-mentioned problems of the conventional techniques and is to propose an advantageous method of producing a non-oriented electrical steel sheet which can increase the magnetic flux density in the rolling direction of the steel sheet considerably.

MEANS FOR SOLVING PROBLEMS

The inventors have made various studies for solving the above problems. As a result, it has been found that the magnetic property in the rolling direction of the steel sheet are considerably improved by heating a cold rolled steel sheet containing an adequate amount or more of C and rolled to a final thickness at a rate faster than a temperature rising rate in the conventional finish annealing, and the invention has been accomplished.

That is, the invention is a method of producing a non-oriented electrical steel sheet by subjecting a steel slab comprising C: 0.015-0.05 mass%, Si: not more than 4 mass%, Mn: 0.05-3 mass%, Al: not more than 3 mass%, S: not more than 0.005 mass%, N: not more than 0.005 mass%, optionally further comprising at least one of Sn and Sb in an amount of 0.005-0.1 mass%, respectively and the remainder being Fe and inevitable impurities to hot rolling, cold rolling and finish annealing, characterized in that the finish annealing is conducted under conditions that an average temperature rising rate during the heating is not less than 100°C/sec and a soaking temperature is a temperature range of 750-1100°C.

In the production method of the invention, it is preferable to conduct decarburization annealing after the finish annealing.

EFFECT OF THE INVENTION

According to the invention, there are provided non-oriented electrical steel sheets having excellent magnetic property in the rolling direction of the steel sheet. Therefore, the invention largely contributes to improve the efficiency of motor or transformer by applying the steel sheet to applications such as segment core, core for transformer and the like requiring excellent magnetic property in the rolling direction.

BRIEF DESCRIPTION OF THE DRAWINGS

FIG. 1 is a graph showing an influence of a temperature rising rate in finish annealing (horizontal axis: °C/sec) on a magnetic flux density $B_{50\text{-}L}$ in rolling direction (vertical axis: T).

FIG. 2 is a graph showing an influence of a C content (horizontal axis: mass%) on a magnetic flux density $B_{50-L}$ in rolling direction (vertical axis: T).

## EMBODIMENTS FOR CARRYING OUT THE INVENTION

At first, the invention will be described with respect to experiments for the development of the invention.

In order to research an influence of a temperature rising rate in the heating for finish annealing on a magnetic flux density in a rolling direction of a steel sheet, a non-oriented electrical steel sheet is prepared by heating a steel slab containing C: 0.0025 mass% or 0.02 mass% and further having a fundamental composition of Si: 3.3 mass%, Mn: 0.1 mass%, Al: 0.001 mass%, N: 0.0019 mass% and S: 0.0010 mass% at 1100°C for 30 minutes and hot rolling it to form a hot rolled sheet having a thickness of 2.6 mm, subjecting a hot band annealing at 1000°C for 30 seconds, subjecting to a single cold rolling to form a cold rolled sheet having a final thickness of 0.35 mm, heating the cold rolled sheet at a temperature rising rate of 30-300°C/sec in a direct power heating furnace to conduct finish annealing of 900°C x 10 seconds, and then conducting decarburization annealing at 850°C in an atmosphere having a dew point of 30°C for 30 seconds.

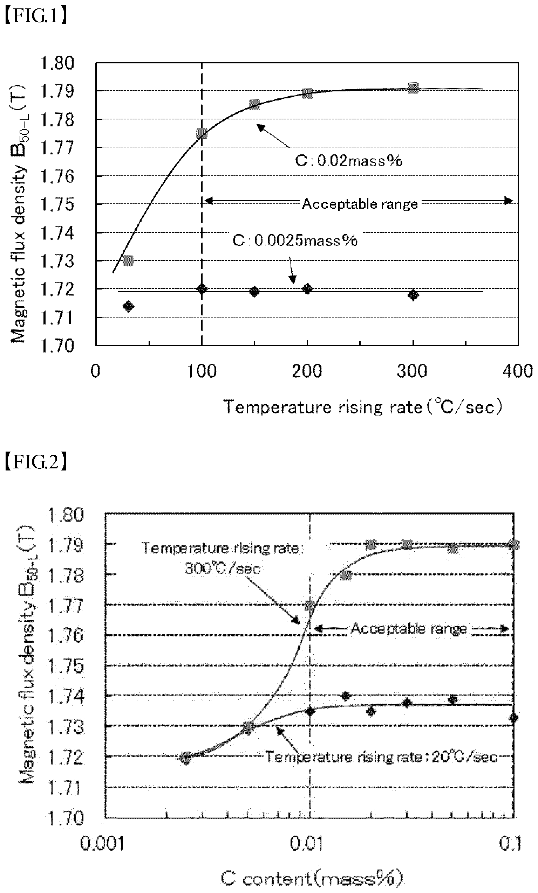

From each of the thus obtained non-oriented electrical steel sheets is cut out a specimen of 180 mm in rolling direction (L-direction) x 30 mm in vertical direction to the rolling direction (C-direction), and a magnetic flux density in L-direction $B_{50-L}$ of the specimen is measured by a single sheet magnetic test to obtain results shown in FIG. 1. It can be seen from FIG. 1 that the magnetic flux density in the rolling direction can be increased by heating the cold rolled sheet containing C: 0.02 mass% at a temperature rising rate of not less than 100°C/sec to conduct finish annealing.

In order to research an influence of a C content on a magnetic flux density in a rolling direction of a steel sheet, a non-oriented electrical steel sheet is prepared by heating a steel slab containing C:0.015-0.05 mass%, Si: 3.3 mass%, Mn: 0.15 mass%, Al: 0.001 mass%, N: 0.0022 mass%, S: 0.0013 mass% at 1100°C for 30 minutes, hot rolling to form a hot rolled sheet having a thickness of 2.3 mm, subjecting a hot band annealing at 1000°C for 30 seconds and further to a single cold rolling to form a cold rolled sheet having a final thickness of 0.35 mm, heating the cold rolled sheet at a temperature rising rate of 20°C/sec or 300°C/sec in a direct power heating furnace to conduct finish annealing of 950°C x 10 seconds, and thereafter subjecting to a decarburization annealing at 850°C in an atmosphere having a dew point of 30°C for 30 seconds.

From each of the thus obtained non-oriented electrical steel sheets is cut out a specimen of 180 mm in rolling direction (L-direction) x 30 mm in vertical direction to the rolling direction (C-direction), and a magnetic flux density in L-direction $B_{50-L}$ of the specimen is measured in the same manner as in the above experiment to obtain results shown in FIG. 2. It can be seen from FIG. 2 that the magnetic flux density in the rolling direction can be increased by heating the cold rolled sheet containing not less than0.015 mass% of C at a temperature rising rate of not less than 100°C/sec to conduct finish annealing.

Although the above reason is not clear at the current moment, it is considered that solute C content is increased by making C content to not less than 0.015 mass%, which is easy to form a deformation band in the cold rolling and develops Goss structure after the annealing, and further that development of (111) orientation is suppressed by conducting rapid heating and hence a crystal structure of (110) orientation or (100) orientation is developed in the rolling direction to improve the magnetic flux density in the rolling direction. As seen from this result, it is necessary that in order to increase the magnetic flux density in the rolling direction, the temperature rising rate in the heating for finish annealing is not less than 100°C/sec and further C content in the raw steel sheet is not less than0.015 mass% from a viewpoint of ensuring solute C before the finish annealing.

This invention is made as a result of further consideration to the above knowledge.

The reason on the limitation of the element composition in the non-oriented electrical steel sheet of the invention will be described below.

C: 0.015-0.05 mass%

C solid-soluted in steel pins dislocation introduced in the cold rolling to easily form a deformation band. This deformation band has an effect of improving magnetic property in the rolling direction because Goss orientation {110} <001> is preferentially grown by recrystallization in the finish annealing. In order to obtain the effect of solute C, it is necessary that the C content in the steel sheet before the cold rolling is not less than0.015 mass%. On the other hand, if solute C in a steel sheet product is large, magnetic aging is caused to deteriorate magnetic property, so that it is necessary that decarburization is conducted at the annealing step after the cold rolling to reduce C content to not more than 0.005 mass%. However, if C content in steel exceeds 0.05 mass%, there is a fear that the decarburization can not be conducted sufficiently by the above decarburization annealing. The C content is a range of 0.015-0.05 mass%.

A more preferable lower limit is 0.02 mass%. Moreover, the decarburization annealing may be conducted at any time after the rapid heating.

Si: not more than 4 mass%

Si is an element added for enhancing a specific resistance of steel to improve a property on iron loss. In order to obtain such an effect, it is preferable to be added in an amount of not less than 1.0 mass%. On the other hand, the addition of more than 4 mass% hardens steel to make rolling difficult, so that the upper limit is 4 mass%. Preferably, it is a range of 1.0-4.0 mass%. A more preferable lower limit is 1.5 mass%.

Mn: 0.05-3 mass%

Mn is an element required for preventing cracking in the hot rolling due to S. In order to obtain such an effect, the addition of not less than 0.05 mass% is necessary. On the other hand, the addition of more than 3 mass% brings about the increase of cost of raw materials. Therefore, Mn is a range of 0.05-3 mass%. A more preferable upper limit is 2.5 mass%. Moreover, since Mn rises a specific resistance, if it is intended to proceed further iron loss, it is preferable to be not less than 1.5 mass%, while if the workability and productivity are important, it is preferable to be not more than 2.0 mass%.

Al: not more than 3 mass%

Al has an effect of enhancing a specific resistance of steel to improve a property on iron loss likewise Si, so that it is an element added if necessary. However, the addition of more than 3 mass% deteriorates the rolling property, so that the upper limit is 3 mass%. More preferably, it is not more than 2.5 mass%. Also, Al is preferable to be not less than 1.0 mass% if the iron loss is more important, and not more than 2.0 mass% if the workability and productivity are more important. Moreover, the addition of Al is not essential, but if Al is not added, it is usually present slightly as an inevitable impurity.

S: not more than 0.005 mass%, N: not more than 0.005 mass%

S and N are impurity elements inevitably incorporated into steel. If each of them exceeds 0.005 mass%, the magnetic property are deteriorated. In the invention, therefore, each of S and N is limited to not more than 0.005 mass%.
The non-oriented magnet steel sheet according to the invention may contain Sn and Sb within the following ranges in addition to the above essential ingredients.

Sn: 0.005-0.1 mass%, Sb: 0.005-0.1 mass%

Sn and Sb are elements having an effect of not only improving the texture after the finish annealing to increase the magnetic flux density in the rolling direction but also preventing oxidation or nitriding of surface layer in the steel sheet to suppress the formation of fine grains in the surface layer of the steel sheet and prevent the deterioration of the magnetic property. In order to develop such an effect, at least one of Sn and Sb is preferable to be added in an amount of not less than 0.005 mass%. However, if the content of each of these elements exceeds 0.1 mass%, the growth of crystal grains is inhibited and these is rather a fear of deteriorating the magnetic property. Therefore, each of Sn and Sb is preferable to be added within a range of 0.005-0.1 mass%.
In the non-oriented electrical steel sheet according to the invention, the remainder other than the above ingredients is Fe and inevitable impurities. However, it is not refused that elements other than the above ingredients are contained unless they do not damage the effects of the invention and also that the abovementioned optional ingredients are contained in an amount of less than the above lower limit as an impurity.
The production method of the non-oriented electrical steel sheet according to the invention will be described below.
The production method of the non-oriented electrical steel sheet according to the invention is preferable to be a method wherein steel having the aforementioned element composition adaptable for the invention is melted by a usually well-known refining process using a converter, an electric furnace, a vacuum degassing apparatus or the like and shaped into a steel slab by a continuous casting method or an ingot making-slabbing method and thereafter the steel slab is hot rolled by a usually well-known method, subjected to a hot band annealing if desired and cold rolled to form a cold rolled sheet having a final thickness and then the cold rolled sheet is subjected to finish annealing and decarburization annealing and further to the formation of various insulating coatings, if necessary, to provide a product. In this production method, the process up to the cold rolling is not particularly limited except that the element composition of the raw materials is adapted to that of the invention, so that the usually well-known production process can be adopted. Also, the hot band annealing is not necessarily conducted at a higher temperature and is sufficient at about 850-1000°C, but the hot band annealing outside the above range is not excluded.

The production method subsequent to the cold rolling will be described below.

Cold rolling

The cold rolling may be a single cold rolling or may be two or more cold rollings through an intermediate annealing. Moreover, if the rolling reduction in the production of the non-oriented electrical steel sheet is usual (not less than about 50%), the introduction of the deformation band is ensured by the aforementioned element composition.

Finish annealing

The finish annealing is necessary to be conducted by heating from 300°C to 800°C at a temperature rising rate of not less than 100°C/sec. Because, the texture of (111) orientation undesirable to the magnetic property is developed at a temperature rising rate of less than 100°C/sec. Preferably, it is not less than 200°C/sec. The upper limit is not particularly defined, but is practical to be not more than about 500°C/sec.

Also, the soaking temperature is necessary to be a range of 750-1100°C. The lower limit temperature may be a temperature above a recrystallization temperature, but is necessary to be not lower than 750°C for causing the sufficient recrystallization in the continuous annealing. While, if the soaking temperature exceeds 1100°C, the recrystallized grains become coarsened or the burden of the annealing furnace becomes larger. Preferably, it is a range of 800-1050°C.

Also, the soaking time may be a time of sufficiently proceeding the recrystallization, and may be, for example, not less than 5 seconds. While, if it exceeds 120 seconds, the effect is saturated, so that it is preferable to be not more than 120 seconds.

Moreover, the cooling condition after the annealing is sufficient to be usual conditions, and is not particularly limited. Also, the method of making the temperature rising rate in the heating for finish annealing to not less than 100°C/sec is not particularly limited, and a direct power heating method, a dielectric heating method or the like may be used preferably.

Decarburization annealing

The finish-annealed steel sheet is subjected to decarburization annealing to reduce solute C content and prevent magnetic aging, so that it is preferable to reduce C content in steel to not more than 0.0050 mass%. If the C content exceeds 0.0050 mass%, it is feared to cause magnetic aging of a steel sheet product. The conditions of the decarburization annealing may be commonly well-known conditions. For example, it can be conducted under conditions of 800-850°C x 10-30 seconds in an oxidizing atmosphere having a dew point of not lower than 30°C.

Moreover, the decarburization annealing may be conducted continuously followed by the finish annealing, or may be separately conducted in another line. The steel sheet after the decarburization annealing is preferable to be rendered into a product by subsequently forming various insulating coatings, if desired.

EXAMPLES

Each of steels Nos. 1-29 having an element composition shown in Table 1 is melted by a usually well-known refining process and continuously cast into a raw steel material (slab), and the slab is heated at 1080°C for 30 minutes and then hot rolled to form a hot rolled sheet having a thickness of 2.4 mm. Then, the hot rolled sheet is subjected to an annealing at 900°C for 30 seconds and to a single cold rolling to form a cold rolled sheet having a final thickness of 0.35 mm. Thereafter, the cold rolled sheet is heated at various temperature rising rates of not less than 30°C/sec in a direct power heating furnace and soaked at a temperature shown in Table 1 for 10 seconds to conduct finish annealing, and then subjected to decarburization annealing of 850°C x 30 seconds (dew point: 30°C) to prepare a non-oriented electrical steel sheet.

Next, a L-direction test specimen of L: 180 mm x C: 30 mm is cut out from each of the thus obtained non-oriented electrical steel sheets, which is subjected to a single sheet test to measure a magnetic flux density in L direction $B_{50}$ (magnetic flux density as magnetized at 5000 A/m). The measured results are also shown in Table 1. It can be seen from the results of Table 1 that all of steel sheets obtained by subjecting steel sheet adapted to the element composition of the invention to finish annealing under conditions adapted to the invention have a high magnetic flux density because $B_{50}$ in L direction ($B_{50-L}$) is not less than 1.75T.

Table 1

| No. | Chemical composition (mass%) | | | | | | | | Finish annealing conditions | | $B_{50-L}$ (T) | Remarks |
|---|---|---|---|---|---|---|---|---|---|---|---|---|
| | C | Si | Mn | Al | S | N | Sn | Sb | Temperature rising rate (°C/sec) | Annealing temperature (°C) | | |
| 1 | <u>0.003</u> | 3.0 | 0.15 | 0.001 | 0.0012 | 0.0016 | 0.001 | 0.001 | 150 | 950 | 1.72 | Comparative Example |
| 2 | <u>0.005</u> | 3.0 | 0.15 | 0.001 | 0.0013 | 0.0020 | 0.001 | 0.001 | 150 | 950 | 1.73 | Comparative Example |
| 3 | 0.010 | 3.0 | 0.10 | 0.001 | 0.0010 | 0.0018 | 0.001 | 0.001 | 200 | 950 | 1.78 | Comparative Example |
| 4 | 0.020 | 3.0 | 0.15 | 0.001 | 0.0014 | 0.0015 | 0.001 | 0.001 | 200 | 950 | 1.79 | Invention Example |
| 5 | 0.050 | 0.5 | 0.15 | 0.001 | 0.0012 | 0.0017 | 0.001 | 0.001 | 300 | 800 | 1.88 | Invention Example |
| 6 | 0.100 | 1.5 | 0.15 | 0.001 | 0.0014 | 0.0015 | 0.001 | 0.001 | 300 | 850 | 1.84 | Comparative Example |
| 7 | 0.030 | 3.7 | 0.15 | 0.001 | 0.0018 | 0.0015 | 0.001 | 0.001 | 300 | 1025 | 1.76 | Invention Example |
| 8 | 0.020 | <u>4.5</u> | 0.15 | 0.001 | 0.0014 | 0.0015 | 0.001 | 0.001 | Breakage during cold rolling | | | Comparative Example |
| 9 | 0.020 | 3.0 | 0.15 | 0.020 | 0.0014 | 0.0015 | 0.001 | 0.001 | 120 | 950 | 1.78 | Invention Example |
| 10 | 0.020 | 3.0 | 0.15 | 0.10 | 0.0014 | 0.0015 | 0.001 | 0.001 | 120 | 1000 | 1.77 | Invention Example |
| 11 | 0.070 | 2.5 | 0.15 | 0.50 | 0.0014 | 0.0015 | 0.001 | 0.001 | 150 | 950 | 1.77 | Comparative Example |
| 12 | 0.020 | 2.0 | 0.15 | 1.20 | 0.0014 | 0.0015 | 0.001 | 0.001 | 150 | 950 | 1.77 | Invention Example |
| 13 | 0.040 | 1.8 | 0.15 | 2.50 | 0.0014 | 0.0015 | 0.001 | 0.001 | 200 | 900 | 1.77 | Invention Example |
| 14 | 0.020 | 1.0 | 0.10 | <u>4.50</u> | 0.0015 | 0.0021 | 0.001 | 0.001 | Breakage during cold rolling | | | Comparative Example |
| 15 | 0.020 | 3.0 | 0.07 | 0.001 | 0.0014 | 0.0015 | 0.001 | 0.001 | 250 | 900 | 1.80 | Invention Example |
| 16 | 0.015 | 2.5 | 1.00 | 0.001 | 0.0016 | 0.0015 | 0.001 | 0.001 | 250 | 900 | 1.78 | Invention Example |
| 17 | 0.020 | 2.0 | 2.50 | 0.001 | 0.0014 | 0.0017 | 0.001 | 0.001 | 250 | 900 | 1.77 | Invention Example |
| 18 | 0.020 | 3.0 | <u>4.00</u> | 0.001 | 0.0014 | 0.0015 | 0.001 | 0.001 | 300 | 900 | 1.73 | Comparative Example |

(continued)

| No. | Chemical composition (mass%) | | | | | | | | Finish annealing conditions | | $B_{50-L}$ (T) | Remarks |
|---|---|---|---|---|---|---|---|---|---|---|---|---|
| | C | Si | Mn | Al | S | N | Sn | Sb | Temperature rising rate (°C/sec) | Annealing temperature (°C) | | |
| 19 | 0.020 | 3.0 | 0.15 | 0.001 | 0.0090 | 0.0015 | 0.001 | 0.001 | 300 | 1000 | 1.70 | Comparative Example |
| 20 | 0.020 | 3.0 | 0.15 | 0.001 | 0.0014 | 0.0080 | 0.001 | 0.001 | 300 | 1000 | 1.71 | Comparative Example |
| 21 | 0.060 | 3.0 | 0.15 | 0.001 | 0.0014 | 0.0015 | 0.050 | 0.001 | 350 | 1030 | 1.80 | Comparative Example |
| 22 | 0.030 | 3.0 | 0.15 | 0.001 | 0.0014 | 0.0015 | 0.001 | 0.050 | 350 | 1030 | 1.80 | Invention Example |
| 23 | 0.020 | 3.0 | 0.07 | 0.001 | 0.0014 | 0.0015 | 0.030 | 0.030 | 350 | 1000 | 1.79 | Invention Example |
| 24 | 0.020 | 3.0 | 0.15 | 0.001 | 0.0014 | 0.0015 | 0.008 | 0.001 | 250 | 1000 | 1.78 | Invention Example |
| 25 | 0.020 | 3.0 | 0.15 | 0.001 | 0.0014 | 0.0015 | 0.001 | 0.008 | 250 | 1000 | 1.78 | Invention Example |
| 26 | 0.030 | 3.0 | 0.16 | 0.001 | 0.0017 | 0.0014 | 0.001 | 0.001 | 30 | 950 | 1.71 | Comparative Example |
| 27 | 0.030 | 3.0 | 0.16 | 0.001 | 0.0013 | 0.0024 | 0.001 | 0.001 | 80 | 950 | 1.71 | Comparative Example |
| 28 | 0.020 | 3.0 | 0.15 | 0.001 | 0.0014 | 0.0015 | 0.050 | 0.001 | 250 | 1000 | 1.78 | Invention Example |
| 29 | 0.020 | 3.0 | 0.15 | 0.001 | 0.0014 | 0.0015 | 0.001 | 0.050 | 250 | 1000 | 1.78 | Invention Example |

INDUSTRIAL APPLICABILITY

According to the invention, there can be provided non-oriented electrical steel sheets having excellent magnetic property in the rolling direction of the steel sheet. Therefore, the invention largely contributes to improve the efficiency of motor or transformer by applying the steel sheet to applications requiring excellent magnetic property in the rolling direction such as segment core, core for transformer and the like.

**Claims**

1.  A method of producing a non-oriented electrical steel sheet by subjecting a steel slab comprising C: 0.015-0.05 mass%, Si: not more than 4 mass%, Mn: 0.05-3 mass%, Al: not more than 3 mass%, S: not more than 0.005 mass%, N: not more than 0.005 mass%, optionally further comprising at least one of Sn and Sb in an amount of 0.005-0.1 mass%, respectively and the remainder being Fe and inevitable impurities to hot rolling, cold rolling and finish annealing, **characterized in that** the finish annealing is conducted under conditions that an average temperature rising rate during the heating is not less than 100°C/sec and a soaking temperature is a temperature range of 750-1100°C.

2.  The method of producing a non-oriented electrical steel sheet according to claim 1, wherein decarburization annealing is conducted after the finish annealing.

**Patentansprüche**

1.  Verfahren zum Herstellen eines nicht orientierten Elektrostahlblechs, indem eine Stahlbramme, umfassend C: 0,015 bis 0,5 Massen-%, Si: nicht mehr als 4 Massen-%, Mn: 0,05 bis 3 Massen-%, Al: nicht mehr als 3 Massen-%, S: nicht mehr als 0,005 Massen-%, N: nicht mehr als 0,005 Massen-%, optional ferner umfassend wenigstens eines aus Sn und Sb in einer Menge von jeweils 0,005 bis 0,1 Massen-%, wobei es sich beim Rest um Fe und unvermeidliche Verunreinigungen handelt, einem Warmwalzen, einem Kaltwalzen und einem Fertigglühen unterzogen wird, **dadurch gekennzeichnet, dass** das Fertigglühen unter Bedingungen durchgeführt wird, bei denen eine durchschnittliche Rate des Temperaturanstiegs während des Erhitzens nicht weniger als 100 °C/sec beträgt und eine Haltetemperatur ein Temperaturbereich von 750 bis 1100 °C ist.

2.  Verfahren zum Herstellen eines nicht orientierten Elektrostahlblechs nach Anspruch 1, wobei ein Entkohlungsglühen nach dem Fertigglühen durchgeführt wird.

**Revendications**

1.  Procédé de production d'une tôle d'acier électrique non orienté en soumettant une brame d'acier comprenant de 0,015 à 0,05 % en masse de C, pas plus de 4 % en masse de Si, de 0,05 à 3 % en masse de Mn, pas plus de 3 % en masse d'Al, pas plus de 0,005 % en masse de S, pas plus de 0,005 % en masse de N, comprenant en outre facultativement au moins l'un de Sn et de Sb en une quantité de 0,005 à 0,1 % en masse, respectivement, le reste étant du Fe et des impuretés inévitables d'un laminage à chaud, d'un laminage à froid et d'un recuit de finition, **caractérisé en ce que** le recuit de finition est effectué dans des conditions telles qu'une vitesse d'augmentation de température moyenne pendant le chauffage ne soit pas inférieure à 100°C/s et qu'une température de trempage soit dans la plage de températures allant de 750 à 1 100°C.

2.  Procédé de production d'une tôle d'acier électrique non orienté selon la revendication 1, dans lequel un recuit de décarburation est effectué après le recuit de finition.

【FIG.1】

【FIG.2】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004332042 A
- JP 2008127600 A

- EP 0334224 A2

**Non-patent literature cited in the description**

- **S. K. CHANG et al.** Texture Effect on Magnetic Properties by Alloying Specific Elements in Non-grain Oriented Silicon Steels. *ISIJ INTERNATIONAL,* 01 January 2005, vol. 45 (6), 918-922